# EUROPEAN PATENT SPECIFICATION

(11) **EP 3 477 934 B1**
(45) Date of publication and mention of the grant of the patent: **10.03.2021**
(21) Application number: 16915699.9
(22) Date of filing: 08.09.2016
(51) Int. Cl.: H04N 5/225, B64C 39/02, B64D 47/08, G03B 17/02, G02B 27/00

(54) **IMAGING SYSTEM**
BILDGEBUNGSSYSTEM
SYSTÈME D'IMAGERIE

(43) Date of publication of application: 01.05.2019
(73) Proprietor: SZ DJI Technology Co., Ltd., Shenzhen, Guangdong 518057 (CN)
(72) Inventor: NAITO, Kiichi, Nanshan, Guangdong Shenzhen 518057 (CN)
(74) Representative: Appelt, Christian W.
(86) International application number: PCT/JP2016/076532
(87) International publication number: WO 2018/047281

(56) References cited:
- EP-A1- 1 973 339
- EP-A1- 2 881 825
- EP-A1- 2 933 996
- JP-A- 2006 259 162
- JP-A- 2007 189 401
- JP-A- 2009 020 230
- JP-A- 2015 212 820
- JP-A- 2016 111 414
- US-A1- 2008 166 113

## Description

### FIELD

The disclosed embodiments relate to an imaging system, a moving object, a method, and a program.

### BACKGROUND

Various techniques are proposed for removing dust and the like adhered to an optical member by vibrating the optical member, which is disposed in front of an image sensor provided in an imaging device. A technique is disclosed in Japanese Patent No. 3727903 wherein an optical element is sequentially vibrated near at least two or more resonant frequencies.
Patent literature 1 Japanese Patent No. 3727903
Patent literature 2 Japanese Patent No. 4253523
Patent literature 3 Japanese Patent No. 5004819
Patent literature 4 Japanese Patent No. 3917893
Patent literature 5 Japanese Patent No. 3947689
Patent literature 6 Japanese Patent No. 4002785
Patent literature 7 Japanese Patent No. 4039904
Patent literature 8 Japanese Patent No. 4863440
Patent literature 9 Japanese Patent No.4660575
Patent literature 10 Japanese Patent No. 4936518
Patent literature 11 Japanese Patent No. 4617277
Patent literature 12 Japanese Patent No. 4859216
Patent literature 13 Japanese Patent No. 4857195
Patent literature 14 Japanese Patent No. 5111219
Patent literature 15 Japanese Patent No. 5264302
Patent literature 16 Japanese Patent No. 5094628
Patent literature 17 Japanese Unexamined Patent Application Publication No. 2014-149907

US 2008/0166113 A1 discloses a camera that can perform a removal operation for particles adherent to a surface upon which light is incident.

EP 1 973 339 A1 discloses an imaging apparatus capable of preventing redeposition of dust on an imaging device to efficiently achieve dust removal.

EP 2 933 996 A1 discloses a dust removal apparatus includes a vibrating plate, a piezoelectric element, a power supply that applies the piezoelectric element with an alternating voltage; and a control circuit (10) that changes a frequency of the alternating voltage.

EP 2 881 825 A1 discloses an imaging method and apparatus. The method comprises measuring, by a position sensor mounted on a support structure attached to an aircraft, a position; measuring, by an orientation sensor mounted on the support structure, an orientation; using the measurements, determining, a current position and orientation of an imaging sensor mounted on the rigid support structure; acquiring a position of a target to be imaged; using the target position, determining a final position and orientation for the imaging sensor; and moving the aircraft and/or changing the orientation of the imaging sensor relative to the support structure such that the imaging sensor has the final position and orientation, thereby providing that the target is in the sensor footprint; and capturing, by the imaging sensor, images of the target.

An imaging system including an optical member can be supported in any orientation. However, depending on the orientation of the optical element, removal of dust and the like may be difficult to perform sufficiently.

The invention is defined by independent claim 1 defining an imaging system mounted on an unmanned aerial vehicle. Embodiments of the invention are defined by the dependent claims.

The imaging system according to an aspect of the present disclosure can include an image sensor. The imaging system can include an optical member disposed in front of the image sensor. The imaging system can include a determining unit for determining an orientation of the optical member. The imaging system can include a first control unit for vibrating the optical member when the orientation of the optical member fulfills the preset conditions.

The first control unit can vibrate the optical member when the normal vector facing the opposite direction of the direction going toward the image sensor from the plane of the optical member on the opposite side of the image sensor has a vertical direction component.

The first control unit can vibrate the optical member when the optical member is below the image sensor in the vertical direction.

The determining unit can further determine a height of the imaging system. The first control unit can vibrate the optical member when the height at which the imaging system is located fulfills the preset conditions, and the orientation of the optical member fulfills the preset conditions.

The determining unit can further determine whether the imaging system is currently executing photography that uses the image sensor. The first control unit can vibrate the optical member when photography is not currently being executed, and the orientation of the optical member fulfills the preset conditions.

The imaging system can further include a second control unit for controlling an orientation of an imaging device including the image sensor and the optical member. The determining unit can further determine the height of the imaging system and whether the imaging system is currently executing photography that uses the image sensor. The second control unit can control the orientation of the imaging device to a preset orientation when the height of the imaging system fulfills the preset conditions and photography is not currently being executed. The first control unit can vibrate the optical member when the height of the imaging system fulfills the preset conditions, photography is not currently being executed, and the orientation of the optical member fulfills the preset conditions.

The first control unit can vibrate the optical member by gradually changing a vibration frequency of the optical member from a first frequency to a second frequency, then gradually changing the vibration frequency from the second frequency to the first frequency.

The imaging system can further include an electromechanical conversion element attached to the optical member. The first control unit can supply a control signal for controlling the vibration of the optical member to the electromechanical conversion element.

The first control unit can supply the control signal to the electromechanical conversion element with a voltage amplitude of a first size when a voltage frequency is a first frequency. The first control unit can supply the control signal to the electromechanical conversion element with a voltage amplitude of a second size, the second size being smaller than the first size, when the voltage frequency is a second frequency closer to a resonant frequency of the optical member than the first frequency.

The first control unit can supply the control signal to the electromechanical conversion element. The control signal has a larger voltage amplitude the farther the voltage frequency is from the second frequency.

The first control unit can determine a first resonant frequency and a second resonant frequency of the electromechanical conversion element. The first control unit can supply the control signal to the electromechanical conversion element based on the identified first resonant frequency and second resonant frequency.

Removal of dust and the like adhered to the optical member can be efficiently executed.

The features described above can also be arranged into a variety of subcombinations within the scope of the appended claims.

### BRIEF DESCRIPTION OF THE DRAWINGS

FIG. 1 illustrates one example of an exterior of an unmanned aerial vehicle (UAV).
FIG. 2 illustrates one example of a UAV function block.
FIG. 3 illustrates an orientation of an optical member.
FIG. 4 illustrates one example of a configuration of a dust removal unit.
FIG. 5 illustrates an exterior of one example of an imaging mechanism that is one part of an imaging device.
FIG. 6 illustrates one example of a relationship of a vibration frequency of a control signal and time.
FIG. 7 illustrates one example of a relationship of a size of a voltage amplitude of the control signal and time.
FIG. 8 illustrates one example of the relationship of the size of the voltage amplitude of the control signal and time.
FIG. 9 is a flowchart illustrating one example of a procedure for vibration control of the optical member.
FIG. 10 is a flowchart illustrating one example of a procedure for executing dust removal.
FIG. 11 is a flowchart illustrating one example of the procedure for executing dust removal.
FIG. 12 illustrates one example of a hardware configuration.

### DETAILED DESCRIPTION OF THE PREFERRED EMBODIMENTS

The present disclosure is described below using preferred embodiments of the disclosure, but the embodiments below do not limit the disclosure according to the scope of the claims. All combinations of features described in the embodiments are not necessary for the means to solve the disclosure.

The scope of the claims, specification, drawings, and abstract include matters subject to protection by copyright. The owner of copyright does not raise objections to duplication by any person of these documents if it is as displayed in the files or records of the Patent Office. However, in all other cases, all copyrights are reserved.

The various embodiments of the present disclosure can be described referencing flowcharts and block diagrams. These blocks can illustrate (1) a step of a process that executes an operation, or (2) a "unit" of a device having a role in executing an operation. A specific step or "unit" can be implemented through a programmable circuit and/or a processor. A dedicated circuit can include a digital and/or analog hardware circuit. An integrated circuit (IC) and/or discrete circuit can be included. A programmable circuit can include a reconfigurable hardware circuit. The reconfigurable hardware circuit can include a memory element, such as a logical AND, logical OR, logical XOR, logical NAND, logical NOR, and other logical operations; a flip-flop; a register; a field programmable gate array (FPGA); and a programmable logic array (PLA).

A computer-readable medium can include any tangible device that can store instructions to be executed by a suitable device. As a result, a computer-readable medium having instructions stored thereon can include a manufactured good that includes instructions that can be executed to create means for executing operations designated in a flowchart or a block diagram. As for examples of computer-readable media, electronic recording media, magnetic recording media, optical recording media, electromagnetic recording media, semiconductor recording media, and the like can be included. As for more specific examples of computer-readable media, floppy discs®, diskettes, hard discs, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), digital versatile disc (DVD), Blu-ray (RTM) discs, memory sticks, integrated circuit cards, and the like can be included.

Computer-readable instructions can include either source code or object code written in any combination of one or more of programming languages. The source code or object code can include a conventional procedural programming language. The conventional procedural programming language can be: assembler instructions; instruction set architecture (ISA) instructions; machine instructions, machine-dependent instructions; microcode; firmware instructions; state setting data; an object-oriented programming language such as Smalltalk, JAVA®, C++, or the like; "C" programming language, or a similar programming language. The computer-readable instructions can be provided to a processor or programmable circuit of a general-purpose computer, a special-purpose computer, or another programmable data processing device either locally or via a local area network (LAN) or a wide area network (WAN) such as the Internet. The processor or programmable circuit can execute computer-readable instructions in order to create means for executing the operations designated in a flowchart or block diagram. Examples of a processor can include a computer processor, a processing unit, a microprocessor, a digital signal processor, a controller, a microcontroller, and the like.

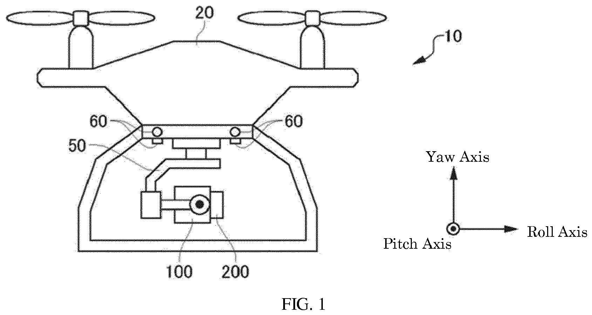

FIG. 1 illustrates one example of an exterior of an unmanned aerial vehicle (UAV) 10. The UAV 10 can include a UAV body 20, a gimbal 50, a plurality of imaging devices 60, an imaging device 100, and a lens device 200. The gimbal 50, the imaging device 100, and the lens device 200 are one example of an imaging system. The UAV 10 is one example of a moving object propelled by a propulsion unit. A moving object can be a concept that includes, in addition to UAVs, other aerial vehicles moving in the air, vehicles moving on the ground, ships moving in the water, and the like.

The UAV body 20 can include a plurality of rotary wings. The plurality of rotary wings can be one example of a propulsion unit. The UAV body 20 can cause the UAV 10 to fly by controlling the rotation of the plurality of rotary wings. For example, the UAV body 20 can cause the UAV 10 to fly by using four rotary wings. The number of rotary wings is not limited to four. Also, the UAV 10 can be a fixed-wing aircraft that does not have rotary wings.

The imaging device 100 can be a camera for imaging that images a subject contained in a desired imaging range. The gimbal 50 can rotatably support the imaging device 100 and the lens device 200. The gimbal 50 can be one example of a carrier. For example, the gimbal 50 can rotatably support the imaging device 100 and the lens device 200 on a pitch axis. The gimbal 50 can further rotatably support the imaging device 100 and the lens device 200 with the roll axis and the yaw axis each as the center. The gimbal 50 can support the imaging device 100, and can support the lens device 200. The imaging device 100 can include the lens device 200. The gimbal 50 can change an orientation of the imaging device 100 by rotating the imaging device 100 and the lens device 200 with at least one of the yaw axis, the pitch axis, and the roll axis at the center.

The imaging device 100 can generate and record image data of optical images formed via the lens device 200. The lens device 200 can be integrally provided with the imaging device 100. The lens device 200 can be a so-called "interchangeable lens," and can be detachably provided on the imaging device 100.

The plurality of imaging devices 60 can be a camera for sensing that images the surroundings of the UAV 10 for controlling the flight of the UAV 10. Two imaging devices 60 can be provided on a front face, which is the nose of the UAV 10. Further, another two imaging devices 60 can be provided on a bottom face of the UAV 10. The two imaging devices 60 on the front face side can act as a pair and function as what is known as a stereo camera. The two imaging devices 60 on the bottom face side can also act as a pair and function as a stereo camera. Three-dimensional spatial data of the surroundings of the UAV 10 can be generated based on the image imaged by the plurality of imaging devices 60. The number of imaging devices 60 provided on the UAV 10 is not limited to four. The UAV 10 can include at least one imaging device 60. The UAV 10 can include at least one imaging device 60 on each of the nose, tail, sides, lower surface, and upper surface of the UAV 10. An angle of view that can be set by the imaging devices 60 can be wider than an angle of view that can be set on the imaging device 100. The imaging devices 60 can have a single focus lens or a fisheye lens.

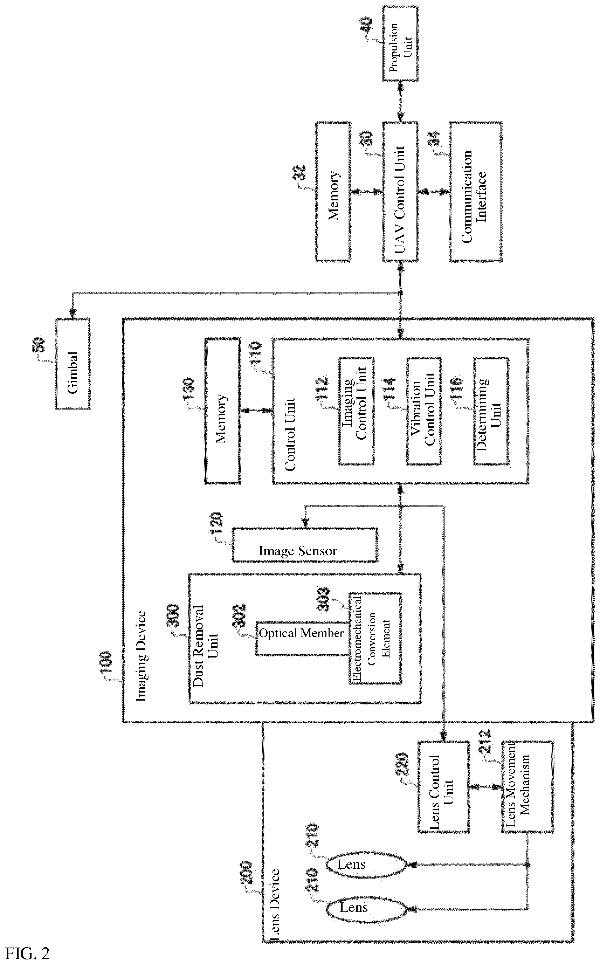

FIG. 2 illustrates one example of a function block of the UAV 10. The UAV 10 can include a UAV control unit 30, a memory 32, a communication interface 34, a propulsion unit 40, the gimbal 50, the imaging devices 60, the imaging device 100, and the lens device 200.

The communication interface 34 can communicate with an external transmitter. The communication interface 34 receives a variety of instructions for the UAV control unit 30 from a remote transmitter. The memory 32 stores programs and the like necessary for the UAV control unit 30 to control the propulsion unit 40, the gimbal 50, the imaging devices 60, the imaging device 100, and the lens device 200. The memory 32 can be a recordable medium that is computer-readable, and can include at least one from among SRAM, DRAM, EPROM, EEPROM, and flash memory such as USB memory. The memory 32 can be provided in the interior of the UAV body 20. The memory 32 can be provided such that it is detachable from the UAV body 20.

The UAV control unit 30 can control the flight and imaging of the UAV 10 following a program stored in the memory 32. The UAV control unit 30 can be configured from a microprocessor such as a CPU or MPU, a microcontroller such as an MCU, or the like. The UAV control unit 30 can control the flight and imaging of the UAV 10 following instructions received from a remove transmitter via the communication interface 34. The propulsion unit 40 can propel the UAV 10. The propulsion unit 40 can have a plurality of rotary wings and a plurality of drive motors for rotating the plurality of rotary wings. The propulsion unit 40 can cause the UAV 10 to fly by rotating the plurality of rotary wings via the plurality of drive motors, following the instructions from the UAV control unit 30.

The lens device 200 can include a plurality of lenses 210, a lens movement mechanism 212, and a lens control unit 220. The plurality of lenses 210 can function as a zoom lens, a varifocal lens, and a focus lens. At least one, or all, of the plurality of lenses 210 can be disposed movably along an optical axis. The plurality of lenses 210 can be an interchangeable lens provided such that the lenses can be attached to or removed from the lens device 200. The lens movement mechanism 212 can move at least one, or all, of the plurality of lenses 210 along the optical axis. The lens control unit 220 can drive the lens movement mechanism 212 following lens control instructions from the imaging device 100 and can move one or a plurality of the lenses 210 along an optical axis direction. The lens control command instructions can be, for example, zoom control instructions and focus control instructions.

The imaging device 100 can include an image sensor 120, a control unit 110, a memory 130, and a dust removal unit 300. The dust removal unit 300 can have an optical member 302 and an electromechanical conversion element 303. The optical member 302 can be disposed in front of the image sensor 120. The optical member 302 can be configured from a material having transparency, such as glass or quartz. The optical member 302 can be configured in a plate shape. "Transparency" means having a property of transmitting light. A material having transparency can be a material having a property such that the light transmissivity in the visual spectrum (350 nm to 780 nm) exceeds at least 50%. The electromechanical conversion element 303 can be attached to the optical member 302. The electromechanical conversion element 303 can convert electrical energy to mechanical energy. The electromechanical conversion element 303 can be, for example, a piezoelectric element.

The control unit 110 can have an imaging control unit 112, a vibration control unit 114, and a determining unit 116. The imaging control unit 112 can control the imaging performed by the imaging device 100. The vibration control unit 114 can control vibration caused by the dust removal unit 300. The vibration control unit 114 can control the vibration of the dust removal unit 300 according to vibration control instructions from the UAV control unit 30. The determining unit 116 can determine an orientation of the optical member 302. The determining unit 116 can determine the orientation of the optical member 302 by determining an orientation of the imaging device 100. The determining unit 116 can determine the orientation of the optical member 302 based on information from an acceleration sensor provided in the imaging device 100. The determining unit 116 can acquire control information for the gimbal 50 via the UAV control unit 30 and determine the orientation of the optical member 302 based on the acquired control information. The determining unit 116 can acquire as control information a rotation angle illustrating an amount the imaging device 100 has rotated from a reference rotation angle with a pitch axis of the gimbal 50 as the center, via the UAV control unit 30.

The determining unit 116 can further determine a height of the imaging system. The determining unit 116 can determine an elevation of the UAV 10 as the height of the imaging system. The determining unit 116 can acquire via the UAV control unit 30 information illustrating the elevation acquired from a barometric altimeter or a GPS receiver provided on the UAV 10. The determining unit 116 can determine the height of the imaging system from information illustrating that height.

The determining unit 116 can further determine whether the imaging system is currently executing photography that uses the image sensor 120. The determining unit 116 can determine whether the imaging system is currently capturing still-images or moving images as photography that uses the image sensor 120.

The control unit 110 can be configured from a microprocessor such as a CPU or MPU, a microcontroller such as an MCU, or the like. The memory 130 can be a computer-readable recording medium, and can include at least one from among SRAM, DRAM, EPROM, EEPROM, and flash memory such as USB memory. The imaging control unit 112, the vibration control unit 114, and the determining unit 116 can be configured from one or a plurality of microcontrollers. The imaging control unit 112, the vibration control unit 114, and the determining unit 116 can each be configured as individual microcontrollers. The memory 130 can be provided in the interior of the housing of the imaging device 100. The memory 130 can be provided such that it is removable from the housing of the imaging device 100.

The image sensor 120 can generate and output to the imaging control unit 112 image data of an optical image formed via the lens 210. The image sensor 120 can be configured from CCD or CMOS. The imaging control unit 112 can store image data output from the image sensor 120 in the memory 130. The imaging control unit 112 can output image data to the memory 32 to be stored therein, via the UAV control unit 30. The imaging control unit 112 can control the lens device 200 according to action instructions for the lens device 200 provided from the UAV control unit 30.

When the imaging device 100 having the dust removal unit 300 is installed on the UAV 10 via the gimbal 50, the UAV 10 can control the orientation of the imaging device 100 via the gimbal 50. When the gimbal 50 is controlling the orientation of the imaging device 100 so that the imaging device 100 faces upward, the face of the optical member 302 on the opposite side of the image sensor 120 can face upward. When the dust removal unit 300 activates in such a state, dust adhering to the face of the optical member 302 on the opposite side of the image sensor 120 cannot easily fall off below in the vertical direction. Meanwhile, when the gimbal 50 is controlling the orientation of the imaging device 100 so that the imaging device 100 faces downward, the face of the optical member 302 on the opposite side of the image sensor 120 can face downward. When the dust removal unit 300 activates in such a state, dust adhering to the face of the optical member 302 on the opposite side of the image sensor 120 can be easily caused to fall off below in the vertical direction. In this manner, by activating the dust removal unit 300 considering the orientation of the imaging device 100, that is, considering the orientation of the optical member 302, removal of dust adhering to the optical member 302 can be effectively executed.

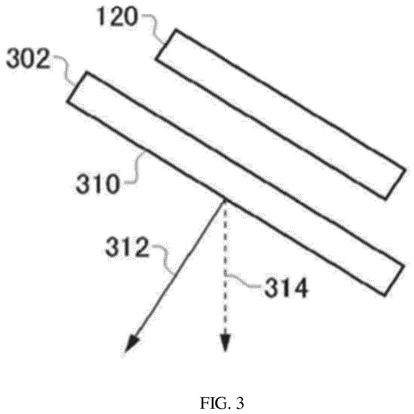

The vibration control unit 114 can vibrate the optical member 302 when the orientation of the optical member 302 identified by the determining unit 116 fulfills preset conditions. The vibration control unit 114 can be one example of a first control unit. For example, as illustrated in FIG. 3, the vibration control unit 114 can vibrate the optical member 302 when a normal vector 312 facing an opposite direction of a direction going toward the image sensor 120 from a plane 310 of the optical member 302 on the opposite side of the image sensor 120 has a vertical direction 314 component. The vibration control unit 114 can vibrate the optical member 302 when the optical member 302 is below the image sensor 120 in the vertical direction. The vibration control unit 114 can vibrate the optical member 302 when the rotation angle illustrating the amount the imaging device 100 has rotated from the reference rotation angle with a pitch axis of the gimbal 50 as the center is in a preset rotation angle range. The vibration control unit 114 can determine that the normal vector 312 has the vertical direction 314 component when the rotation angle of the imaging device 100 on the pitch axis is in a preset rotation angle range. The vibration control unit 114 can determine that the optical member 302 is below the image sensor 120 in the vertical direction when the rotation angle of the imaging device 100 on the pitch axis is in a preset rotation angle range.

The vibration control unit 114 can vibrate the optical member when the height of the imaging system identified by the determining unit 116 fulfills preset conditions, and the orientation of the optical member 302 fulfills preset conditions. The vibration control unit 114 can vibrate the optical member 302 when photography is not currently being executed, and the orientation of the optical member 302 fulfills preset conditions. The vibration control unit 114 can vibrate the optical member 302 when still-image photography and video photography is not currently being executed, and the orientation of the optical member 302 fulfills preset conditions.

The vibration control unit 114 can instruct the UAV control unit 30 to control the orientation of the imaging device 100 that includes the image sensor 120 and the optical member 302. The UAV control unit 30 can control the orientation of the imaging device 100 that includes the image sensor 120 and the optical member 302 via the gimbal 50. At least one of the vibration control unit 114 and the UAV control unit 30 is one example of a second control unit.

The vibration control unit 114 can control the orientation of the imaging device 100 to a preset orientation via the UAV control unit 30 and the gimbal 50 when the height of the imaging system meets the preset conditions and photography is not currently being executed. The vibration control unit 114 can vibrate the optical member 302 when the height of the imaging system meets the preset conditions, photography is not currently being executed, and the orientation of the optical member 302 fulfills preset conditions.

For example, in a case that the lens device 200 is large, when the UAV 10 is in a state of being landed and the gimbal 50 is activated to attempt to make the orientation of the imaging device 100 face downward, there is a possibility of the lens device 200 colliding with the ground. Now, it is preferable to raise the height of the imaging system that includes the imaging device 100 and the lens device 200 to a reasonable height before the orientation of the imaging device 100 can be made to face downward. That is, it is preferable to keep the UAV 10 raised until the height of the UAV 10 reaches a certain elevation before making the orientation of the imaging device 100 face downward. Then, the vibration control unit 114 controls the orientation of the imaging device 100 to a preset orientation via the UAV control unit 30 and the gimbal 50 when the height of the imaging system meets the preset conditions.

There can be instances in which the imaging device 100 is already executing photography from before when the UAV 10 takes off. Thus, when the orientation of the imaging device 100 is made to face downward in response to the UAV 10 reaching the preset elevation, there can be an effect on the photography of the imaging device 100 already being executed. The vibration control unit 114 can preferably control the orientation of the imaging device 100 to the preset orientation via the UAV control unit 30 and the gimbal 50 when the height of the imaging system fulfills preset conditions and photography is not currently being executed by the imaging device 100. The vibration control unit 114 can control the orientation of the imaging device 100 so that the imaging device 100 faces downward via the UAV control unit 30 and the gimbal 50 when the height of the imaging system fulfills preset conditions, and photography is not currently being executed by the imaging device 100.

In the above manner, dust and the like adhering to the optical member 302 can be effectively removed by the vibration control unit 114 vibrating the optical member 302 considering the orientation of the optical member 302.

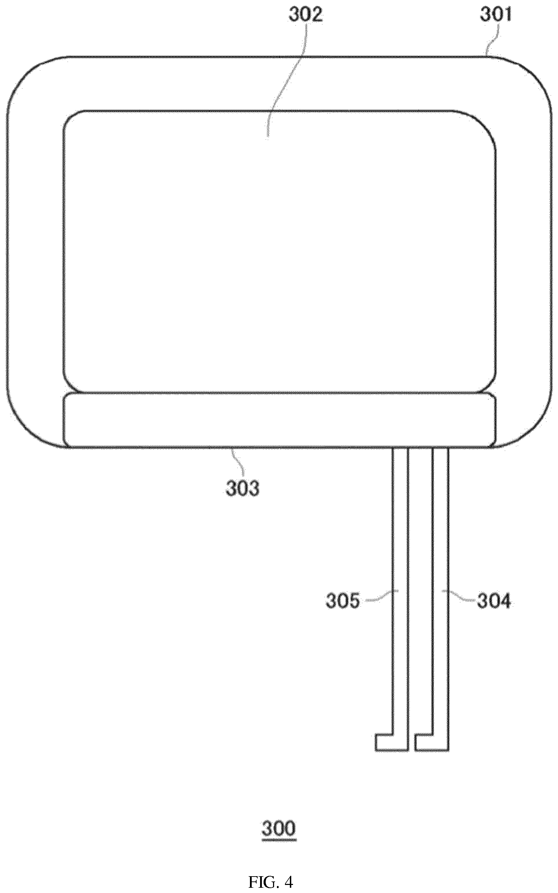

FIG. 4 illustrates one example of a configuration of the dust removal unit 300. The dust removal unit 300 can have a frame 301, the optical member 302, the electromechanical conversion element 303, wires 304, and wires 305. The frame 301 can support the optical member 302. The electromechanical conversion element 303 can be attached to the optical member 302 via the frame 301. The electromechanical conversion element 303 can be electrically connected to the vibration control unit 114 via the wires 304 and the wires 305. A control signal supplied from the vibration control unit 114 can be transmitted to the electromechanical conversion element 303 via the wires 304 and the wires 305. The electromechanical conversion element 303 can vibrate according to the control signal, and can cause the optical member 302 to vibrate. Dust and the like adhered to the optical member 302 can be removed by the vibration of the optical member 302.

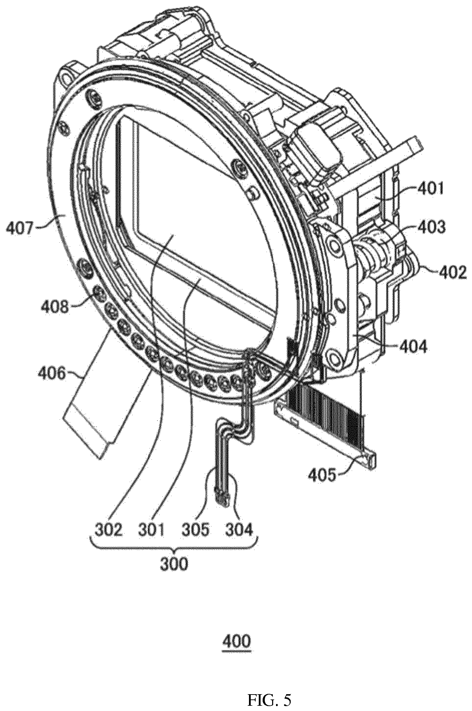

FIG. 5 illustrates one example of an exterior of an imaging mechanism 400 that is a part of the imaging device 100. The imaging mechanism 400 can have a support substrate 401, a heat sink 402, a lens mount 407, and the dust removal unit 300. The support substrate 401 can be provided on one face of the heat sink 402. The support substrate 401 can support the image sensor 120. The optical member 302 can be provided via the frame 301 on a plane of the support substrate 401 on an opposite side of the heat sink 402. The lens mount 407 can be provided on a face of the frame 301 on an opposite side of the support substrate 401. A support body 404 can be provided on the outer periphery part of the lens mount 407. The support body 404 can be integrally configured with the lens mount 407. The support body 404 can be fixed to the support substrate 401 via a spring 403. The spring 403 can adjust the pitch of the support substrate 401. The support substrate 401 can have wires 405. The support substrate 401 can be connected to the control unit 110 via the wires 405. The lens mount 407 can have at least one electrical contact 408 and wires 406. The electrical contact 408 can be connected to the control unit 110 via the wires 406. The lens control instructions can be transmitted from the imaging device 100 to the lens device 200 via the electrical contact 408.

In the imaging device 100 configured in the aforementioned manner, dust and the like adhering to the optical member 302 can be removed by vibrating the optical member 302. The vibration characteristics of the optical member 302 can change according to the surrounding environment, such as temperature and air pressure. For example, the UAV 10 with the imaging device 100 installed thereon flies through the sky, where the surrounding environment changes significantly. When the dust removal unit 300 is used in such surrounding environments, the vibration characteristics of the optical member 302 can fluctuate, and there is a possibility of the optical member 302 not vibrating sufficiently and dust and the like adhered to the optical member 302 not being removed.

The vibration control unit 114 can control the vibration frequency of the optical member 302. The vibration control unit 114 can supply a control signal for controlling the vibration frequency of the optical member 302 to the electromechanical conversion element 303. The vibration control unit 114 can supply to the electromechanical conversion element 303 a control signal at a preset vibration frequency and at a voltage amplitude of a preset size. The electromechanical conversion element 303 can vibrate the optical member 302 based on the control signal from the vibration control unit 114.

The vibration control unit 114 can supply a control signal to the electromechanical conversion element 303 based on a resonant frequency of the electromechanical conversion element 303. Resonant frequencies of the electromechanical conversion element 303 can change with the temperature, humidity, or the mounting state of the electromechanical conversion element 303. The vibration control unit 114 can monitor the amplitude of the vibration of the electromechanical conversion element 303 via a vibration sensor or the like and determine a resonant frequency of the electromechanical conversion element 303. For example, the vibration control unit 114 can monitor the amplitude of the vibration of the electromechanical conversion element 303 via a vibration sensor or the like and determine a plurality of resonant frequencies of the electromechanical conversion element 303. The vibration control unit 114 can supply a control signal based on an identified first resonant frequency and second resonant frequency to the electromechanical conversion element 303. The vibration control unit 114 can vibrate the electromechanical conversion element 303 sequentially at the first resonant frequency and the second resonant frequency by supplying a control signal based on the first resonant frequency and the second resonant frequency to the electromechanical conversion element 303. The vibration control unit 114 can determine a primary resonant frequency as the first resonant frequency and a secondary resonant frequency as the second resonant frequency of the electromechanical conversion element 303. The vibration control unit 114 sequentially vibrates the electromechanical conversion element 303 at the identified primary resonant frequency and secondary resonant frequency of the piezoelectric element by supplying a control signal to the electromechanical conversion element 303 based on the primary resonant frequency and the secondary resonant frequency of the electromechanical conversion element 303.

The vibration control unit 114 can gradually change the vibration frequency of the optical member 302 from the first frequency to the second frequency, then can gradually change the vibration frequency from the second frequency to the first frequency. The first frequency can be either a minimum frequency or a maximum frequency controllable by the vibration control unit 114. The second frequency can be the other frequency of either the minimum frequency or maximum frequency controllable by the vibration control unit 114. For example, the vibration control unit 114 can be configured from a drive driver IC that can output a voltage pulse (rectangular-wave voltage) from the first frequency that is the minimum rated frequency (for example, 10kHz) to the second frequency that is the maximum rated frequency (for example, 50 kHz). The minimum frequency and the maximum frequency controllable by the vibration control unit 114 can be preset in electronic parts at a factory before shipping electronic parts such as a drive driver IC that configures the vibration control unit 114. A resonant frequency of the optical member 302 can be included between the first frequency and the second frequency. The resonant frequency can be a central frequency between the first frequency and the second frequency. The vibration control unit 114 can gradually change the vibration frequency of the optical member 302 to sweep all controllable frequencies. The vibration control unit 114 can gradually change the vibration frequency of the optical member 302 at a preset time interval. The vibration control unit 114 can gradually change the vibration frequency of the optical member 302 in preset frequency intervals. The vibration control unit 114 can repeat a preset number of times the action of gradually changing the vibration frequency of the optical member 302 from the first frequency to the second frequency and then gradually changing from the second frequency to the first frequency.

In the aforementioned manner, the vibration control unit 114 can gradually change the vibration frequency of the optical member 302 from the first frequency to the second frequency, then can gradually change the vibration frequency from the second frequency to the first frequency. This can allow the effect of fluctuations in the vibration characteristics of the optical member 302 that can occur when the dust removal unit 300 is used in a surrounding environment with large fluctuations to be inhibited. Thus, even when the dust removal unit 300 is used in a surrounding environment with large fluctuations, the optical member 302 can be efficiently vibrated. This can allow the phenomenon of the optical member 302 not sufficiently vibrating and dust and the like adhering to the optical member 302 not being removed to be inhibited. For example, the vibration control unit 114 can detect a resonant frequency of the optical member 302 that changes according to the surrounding environment and not control the control signal according to the detected resonant frequency. Thus, a complex configuration of the dust removal unit 300 can be avoided.

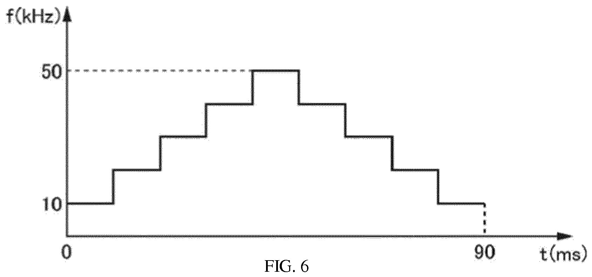

FIG. 6 illustrates one example of a relationship between a vibration frequency of a control signal supplied to the electromechanical conversion element 303 and time. For example, the vibration control unit 114 can supply a control signal to the electromechanical conversion element 303. The control signal can cause the vibration frequency to increase every 10ms by 10kHz at a time to 50kHz, and then can cause the vibration frequency to decrease by 10kHz at a time to 10kHz every 10ms.

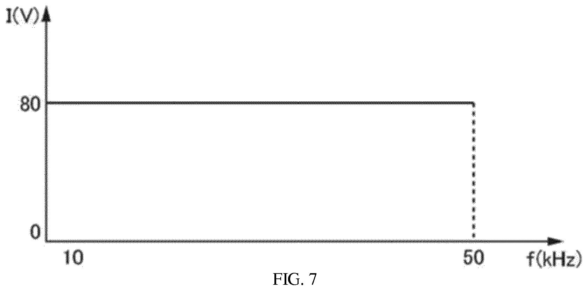

FIG. 7 illustrates one example of a relationship between an amplitude of a voltage of a control signal supplied to the electromechanical conversion element and time. The vibration control unit 114 can supply a control signal to the electromechanical conversion element 303 that has a constant voltage amplitude. For example, the vibration control unit 114 can supply a control signal with a voltage amplitude of 80V to the electromechanical conversion element 303. Control signals with a constant voltage amplitude can include control signals with a voltage amplitude that fluctuates within a preset permissible range. Control signals with a constant voltage amplitude can include control signals with a voltage amplitude that fluctuates within a width of 5V, for example.

In the example above, an example wherein the vibration control unit 114 can supply a control signal with a constant voltage amplitude to the electromechanical conversion element 303 was described. However, the vibration control unit 114 can fluctuate the voltage amplitude of the control signal according to the size of the frequency. The vibration control unit 114 can supply to the electromechanical conversion element 303 a control signal with a voltage amplitude of a first size when the voltage frequency is a first frequency. The vibration control unit 114 can supply to the electromechanical conversion element 303 with a voltage amplitude of a second size that is smaller than the first size when the voltage frequency is a second frequency that is closer to a resonant frequency of the optical member 302 than is the first frequency. The vibration control unit 114 can supply a control signal to the electromechanical conversion element 303 with a voltage amplitude that increases as the voltage frequency becomes farther from the second frequency. The second frequency can be a resonant frequency of the optical member 302.

The vibration control unit 114 can supply a control signal to the electromechanical conversion element that gradually changes the voltage frequency from a first frequency to a second frequency while gradually changing the voltage amplitude from a first size to a second size. The first frequency can be smaller than the second frequency. The second frequency can be a resonant frequency. The vibration control unit 114 can supply to the electromechanical conversion element a control signal. The control signal can gradually change the voltage frequency from the first frequency to the second frequency while gradually changing the voltage amplitude from the first size to the second size. And then, the control signal can gradually change the voltage frequency from the second frequency to a third frequency that is larger than the second frequency while gradually changing the voltage amplitude from the second size to a third size that is larger than the second size.

The vibration control unit 114 can supply to the electromechanical conversion element 303 a control signal. The control signal can gradually change the voltage frequency from the second frequency to the third frequency while gradually changing the voltage amplitude from the second size to the third size. And then, the control signal can gradually change the voltage frequency from the third frequency to the second frequency while gradually changing the voltage amplitude from the third size to the second size. Further, the vibration control unit 114 can supply to the electromechanical conversion element 303 a control signal that gradually changes the voltage frequency from the second frequency to the first frequency while gradually changing the voltage amplitude from the second size to the first size. For example, the vibration control unit 114 can function as a voltage generator that can output a voltage pulse (rectangular-wave voltage) from the first frequency (for example, 10kHz) to the third frequency (for example, 50kHz).

The vibration control unit 114 can repeat the supplying of the control signal to the electromechanical conversion element 303 a preset number of times. The vibration control unit 114 can supply to the electromechanical conversion element 303 a control signal wherein the size of the voltage frequency and voltage amplitude can gradually change at a preset time interval. The vibration control unit 114 can supply to the electromechanical conversion element 303 a control signal wherein the voltage frequency gradually can change at a preset frequency interval, and the size of the voltage amplitude can gradually change at a preset size interval.

The vibration control unit 114 can supply to the electromechanical conversion element 303 a control signal wherein the voltage of the control signal can become a minimum when the voltage frequency of the control signal is near a resonant frequency of the optical member 302. For example, the vibration control unit 114 can supply to the electromechanical conversion element 303 a control signal of a first frequency with the size of the voltage amplitude being 80V. Then, the vibration control unit 114 can supply to the electromechanical conversion element 303 a control signal wherein the size of the voltage amplitude becomes smaller as the frequency approaches a resonant frequency of the optical member 302. Further, the vibration control unit 114 can supply to the electromechanical conversion element 303 a control signal wherein the size of the voltage amplitude becomes larger as the frequency gets farther from a resonant frequency of the optical member 302. The size of the voltage amplitude of the control signal supplied to the electromechanical conversion element 303 can reach a minimum near a resonant frequency of the optical member 302.

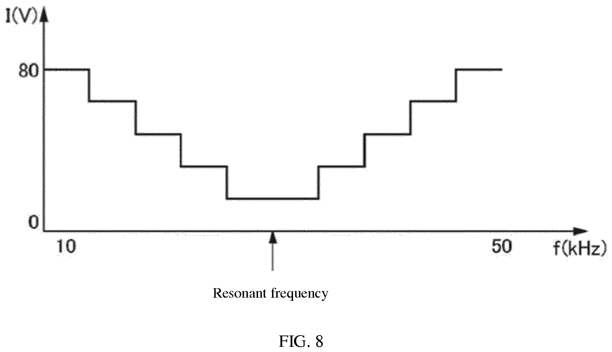

FIG. 8 illustrates one example of a relationship between a size of a voltage amplitude of a control signal supplied to the electromechanical conversion element 303 and time. In this example, a resonant frequency of the optical member 302 can be near 25kHz. The vibration control unit 114 can gradually reduce the voltage of the control signal from a maximum voltage of 80V to a minimum voltage of 10V while gradually increasing the frequency of the control signal from 10kHz to 25kHz. Next, the vibration control unit 114 can gradually increase the voltage of the control signal from the minimum voltage of 10V to the maximum voltage of 80V while gradually increasing the frequency of the control signal from 25kHz to 50kHz. Further, the vibration control unit 114 can gradually reduce the voltage of the control signal from the maximum voltage of 80V to the minimum voltage of 10V while gradually reducing the frequency of the control signal from 50kHz to 25kHz. Next, the vibration control unit 114 can gradually increase the voltage of the control signal from the minimum voltage of 10V to the maximum voltage of 80V while gradually reducing the frequency of the control signal from 25kHz to 10kHz.

In the aforementioned manner, the vibration control unit 114 can change the size of the voltage amplitude of the control signal according to the frequency of the control signal. When the frequency of the control signal is near a resonant frequency of the optical member 302, the vibration amplitude of the optical member 302 can become larger, even when the size of the voltage amplitude of the control signal is small. Meanwhile, when the frequency of the control signal is far from a resonant frequency of the optical member 302, when the size of the voltage amplitude of the control signal is the same as near a resonant frequency, the vibration amplitude of the optical member 302 can become smaller. By making the size of the voltage amplitude of the control signal larger than near a resonant frequency, the vibration amplitude of the optical member 302 can be made larger. This can allow inconsistency in vibration amplitude of the optical member 302 caused by differences in the size of the frequency supplied to the electromechanical conversion element 303 to be inhibited. Thus, the phenomenon of the optical member 302 not sufficiently vibrating and dust and the like adhering to the optical member 302 not being removed due to differences in the size of the frequency supplied to the electromechanical conversion element 303 can be inhibited.

Further, the vibration control unit 114 can gradually change the vibration frequency of the optical member 302 from the first frequency to the third frequency, then can gradually change the vibration frequency from the third frequency to the first frequency. This can allow for inhibiting the effect of fluctuations in the vibration characteristics of the optical member 302 that can occur when the dust removal unit 300 is used in a surrounding environment with large fluctuations. Thus, even when the dust removal unit 300 is used in a surrounding environment with large fluctuations, the optical member 302 can be efficiently vibrated. This can allow the phenomenon of the optical member 302 not sufficiently vibrating and dust and the like adhering to the optical member 302 not being removed to be inhibited. For example, the vibration control unit 114 does not need to detect a resonant frequency of the optical member 302 that changes according to the surrounding environment and control the control signal according to the detected resonant frequency. Thus, a complex configuration of the dust removal unit 300 can be avoided.

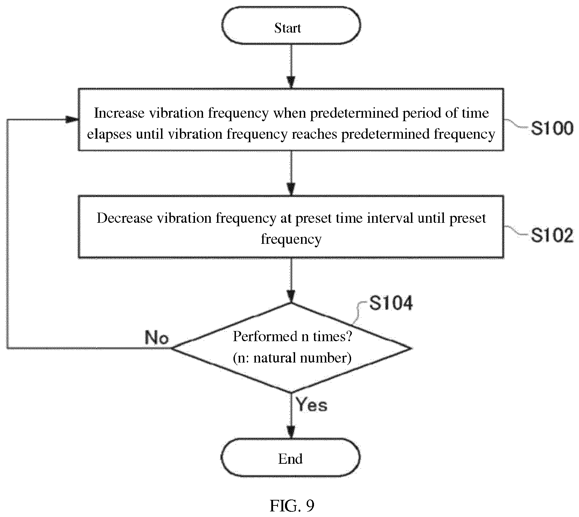

FIG. 9 is a flowchart illustrating one example of a procedure for vibration control of the optical member 302. The vibration control unit 114 can supply to the electromechanical conversion element 303 a control signal wherein the vibration frequency increases when predetermined period of time elapses until the vibration frequency reaches predetermined frequency (S100). Next, the vibration control unit 114 can supply to the electromechanical conversion element 303 a control signal wherein the vibration frequency decreases at a preset frequency (S102). While executing step S100 to step S102, the vibration control unit 114 can adjust the voltage of the control signal so the size of the voltage amplitude of the control signal can become a minimum near a resonant frequency of the optical member 302. The vibration control unit 114 can determine whether the process of step S100 and step S102 has been executed a preset number of times n (n: a natural number) (S104). The vibration control unit 114 can repeat the process of step S100 and step S102 until the measures have been executed the preset number of times n.

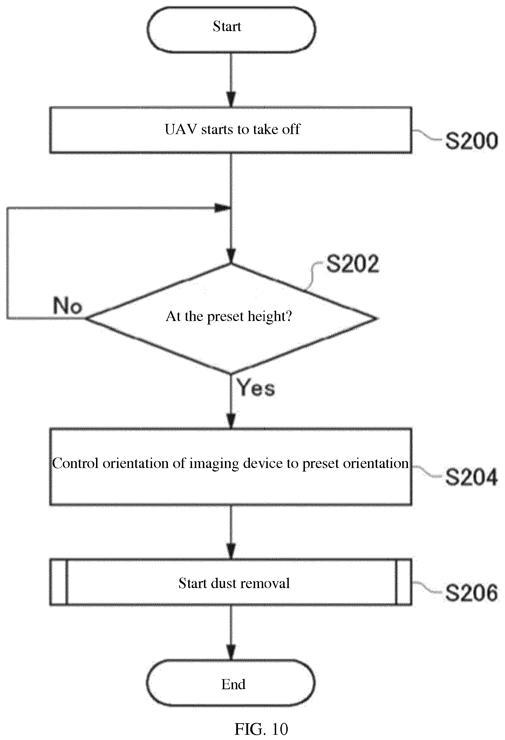

FIG. 10 is a flowchart illustrating one example of a procedure for executing dust removal. The UAV 10 can execute the procedure illustrated in the flowchart of FIG. 9 when the imaging device 100 having the dust removal unit 300 is installed thereon.

The UAV 10 can start take off (S200). The determining unit 116 can determine the elevation of the UAV 10 as the height of the imaging system. After the UAV 10 takes off, the vibration control unit 114 can determine whether the UAV 10 has risen to a preset height (S202). If the UAV 10 has risen to at least the preset height, the vibration control unit 114 can control the gimbal 50 via the UAV control unit 30 and can control the orientation of the imaging device 100 to a preset orientation (S204). The vibration control unit 114 can control the gimbal 50 via the UAV control unit 30 to control the orientation of the imaging device 100 so the imaging device 100 faces downward. When the orientation of the imaging device 100 is controlled to a preset orientation, the vibration control unit 114 can activate the dust removal unit 300 and can start dust removal (S206).

According to the procedure described above, when the UAV 10 reaches at least a preset height, for example, the orientation of the imaging device 100 can be changed to face downward. Thus, even if the lens device 200 provided on the imaging device 100 is large, collision of the lens device 200 into the landing surface of the UAV 10 such as the ground when the orientation of the imaging device 100 is made to face downward can be prevented. When the orientation of the imaging device 100 is made to face downward, the face of the optical member 302 on the opposite side of the image sensor 120 can face downward. When the dust removal unit 300 is activated in this state, dust adhering to the face of the optical member 302 on the opposite side of the image sensor 120 can be easily caused to fall off below in the vertical direction. Thus, the removal of dust can be efficiently executed.

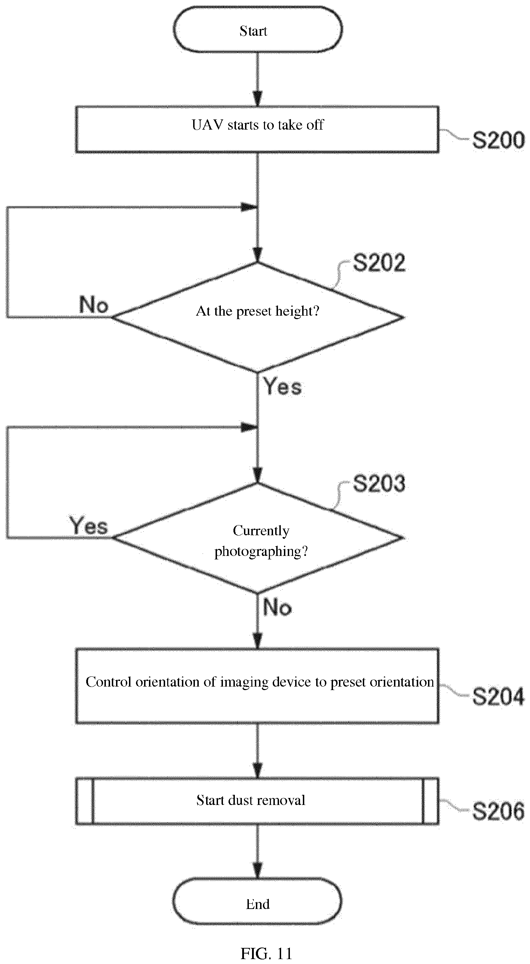

FIG. 11 is a flowchart illustrating one example of a procedure for executing dust removal. The flowchart differs from the flowchart illustrated in FIG. 10 in that the vibration control unit 114 can determine whether photography is currently being executed by the imaging device 100 before controlling the orientation of the imaging device 100.

The UAV 10 can start take off (S200). The determining unit 116 can determine the elevation of the UAV 10 as the height of the imaging system. After the UAV 10 takes off, the vibration control unit 114 can determine whether the UAV 10 has risen to a preset height (S202). If the UAV 10 has risen to at least the preset height, the determining unit 116 can determine whether photography is currently being executed by the imaging device 100. The vibration control unit 114 can determine whether photography is currently being executed by the imaging device 100 based on the identification result of the determining unit 116 (S203). If photography is not currently being executed by the imaging device 100, the vibration control unit 114 can control the gimbal 50 via the UAV control unit 30, and can control the orientation of the imaging device 100 to a preset orientation (S204). The vibration control unit 114 can control the orientation of the imaging device 100 so the imaging device 100 can face downward by controlling the gimbal 50 via the UAV control unit 30. When the orientation of the imaging device 100 is controlled to the preset orientation, the vibration control unit 114 can activate the dust removal unit 300 and starts dust removal (S206).

According to the procedure described above, the orientation of the imaging device 100 can be changed when photography is not being executed by the imaging device 100. As such, when photography is currently being executed by the imaging device 100, the orientation of the imaging device 100 does not need to be changed, regardless of photography. This does not have an effect on the photography of the imaging device 100, and the dust removal unit 300 can be activated in a state of the face of the optical member 302 on the opposite side of the image sensor 120 facing downward. Thus, the dust removal of the dust removal unit 300 does not have an effect on the photography of the imaging device 100, and can be efficiently executed.

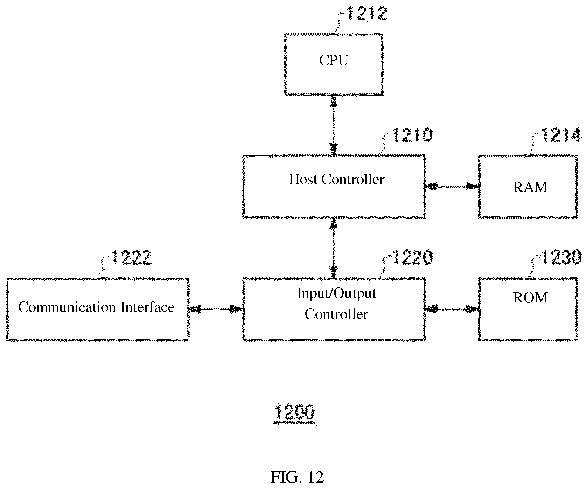

FIG. 12 illustrates a computer 1200 that can entirely or partially realize a plurality of aspects of the present disclosure. A program installed on the computer 1200 can cause the computer 1200 to function as operations related to devices according to an embodiment of the present disclosures or a single or a plurality of "units". Alternatively, the program can cause the computer1200 to execute the operations or the single or plurality of "units". The program can cause the computer 1200 to execute a process or the steps of a process according to an embodiment of the present disclosure. Such a program can execute specific operations related to some or all of the blocks of the flowcharts and block diagrams described in the present specification by executing via a CPU 1212.

The computer 1200 according to the present example can include the CPU 1212 and a RAM 1214, and these can be mutually connected by a host controller 1210. The computer 1200 can further include a communication interface 1222 and an input/output unit, and these can be connected to the host controller 1210 via an input/output controller 1220. The computer 1200 can further include a ROM 1230. The CPU 1212 can act following the program stored in the ROM 1230 and the RAM 1214, and can control each unit thereby.

The communication interface 1222 can communicate with other electronic devices via a network. A hard disc drive 1224 can store the programs and data to be used by the CPU 1212 in the computer 1200. The ROM 1230 can store therein boot programs and the like that are executed by the computer 1200 during activation and/or programs that depend on hardware of the computer 1200. The programs can be provided via a computer-readable recording medium like a CR-ROM, USB memory, or an IC card, or a network. The programs can be installed on the RAM 1214 or the ROM 1230 that are examples of a computer-readable recording medium, and can be executed by the CPU 1212. The information processes written in these programs can be read by the computer 1200, and can bring about the coordination between the programs and the various types of hardware resources described above. Devices or methods can be configured by actualizing the operations or processing of information by following the use of the computer 1200.

For example, when communication is executed between the computer 1200 and an external device, the CPU 1212 can execute a communication program loaded in the RAM 1214, and can instruct the communication interface 1222 to perform communication processes based on the processes written in the communication program. Under the control of the CPU 1212, the communication interface 1222 can read sending data stored in a sending buffer process region provided on a recording medium such as the RAM 1214 or USB memory and can send the read sending data to a network, or can write receiving data received from a network to a receiving buffer process region or the like provided on the recording medium.

Further, the CPU 1212 can make the entirety or necessary portions of files or a database stored on an external recording medium such as USB memory be read by the RAM 1214, and can execute a variety of types of processes relating to the data on the RAM 1214. The CPU 1212 then writes back the processed data to the external recording medium.

A variety of types of programs and a variety of types of information like data, tables, and databases can be stored on the recording medium and receive information processing. The CPU 1212 can execute a variety of types of processes designated by an instruction sequence of the program described throughout the present disclosure relating to data read from the RAM 1214, and can write back the results to the RAM 1214. The variety of types of processes can include a variety of types of operations, information processes, condition determination, condition branching, unconditional branching, information search/replace, and the like. Further, the CPU 1212 can search the information in the files, databases, and the like on the recording medium. For example, a plurality of entries can be stored in the recording medium. Each of the plurality of entries can have an attribute value of a first attribute related to an attribute value of a second attribute. When the plurality of entries are stored on the recording medium, the CPU 1212 can search from the plurality of entries for an entry that matches the conditions and for which the attribute value of the first attribute is designated. The CPU 1212 can then read the attribute value of the second attribute stored in the entry; thus allowing the attribute value of the second attribute related to the first attribute that fulfills preset conditions to be acquired.

The program or software module described above can be stored on the computer 1200 or on a computer-readable medium near the computer 1200. Further, a recording medium like a hard disc or RAM provided in a server system connected to a private communications network or the internet can be used as a computer-readable medium, and the program is thereby provided to the computer 1200 via the network.

The present disclosure is described using embodiments and examples, but the technical scope of the disclosure is not limited to the scope in the above embodiments. It should be clear to a person skilled in the art that the above embodiments are susceptible to various modifications or improvements within the scope of the appended claims.

The order of each process in the operations, procedures, steps, stages, and the like of the devices, systems, programs, and methods in the scope of the claims, specification, and drawings is not specifically disclosed using "beforehand", "in advance", and the like, and any order is possible as long as a postprocess does not use the output of a preprocess. Even if "first", "next", and the like are used for convenience in describing the flow of operations in the scope of the claims, specification, and drawings, it is not meant that it must be executed in this order.

### DESCRIPTION OF REFERENCE NUMERALS

- 10: UAV
- 20: UAV body
- 30: UAV control unit
- 32, 130: Memory
- 34: Communication interface
- 40: Propulsion unit
- 50: Gimbal
- 60: Imaging device
- 100: Imaging device
- 110: Control unit
- 112: Imaging control unit
- 114: Vibration control unit
- 120: Image sensor
- 200: Lens device
- 210: Lens
- 212: Lens movement mechanism
- 220: Lens control unit
- 300: Dust removal unit
- 301: Frame
- 302: Optical member
- 303: Electromechanical conversion element
- 304, 305, 405, 406: Wires
- 400: Imaging mechanism
- 401: Support substrate
- 402: Heat sink
- 404: Support body
- 407: Lens mount
- 408: Electrical contact

## Claims

1. An imaging system mounted on an unmanned aerial vehicle (UAV)(10), comprising:
an image sensor (120);
an imaging device (100) including an optical member (302) disposed in front of the image sensor (120) and a determining unit (116) for determining an orientation of the optical member (302);
a first control unit (114) for vibrating the optical member (302) when the orientation of the optical member (302) fulfills preset conditions; and
a second control unit (30) for controlling an orientation of the imaging device (100) ;
the imaging system being **characterized**
**in that** the determining unit (116) is configured to identify an elevation of the UAV (10) as the height of the imaging system, and
**in that** the second control unit (30) is configured to control the orientation of the imaging device (100) to face downward when the height of the imaging system reaches at least a preset height, and
**in that** the first control unit (114) is configured to vibrate the optical member (302) when the height of the imaging system reaches at least the preset height after the UAV takes off and when the optical member (302) is below the image sensor (120) in a vertical direction.;

2. The imaging system according to claim 1, wherein the first control unit (114) is configured to vibrate the optical member (302) when the normal vector facing an opposite direction of a direction going toward the image sensor (120) from a plane of the optical member (302) on an opposite side of the image sensor (120) has a vertical direction component.

3. The imaging system according to claim 1, wherein
the determining unit (116) is further configured to identify whether the imaging system is currently executing photography that uses the image sensor (120), and
the first control unit (114) is configured to vibrate the optical member (302) when photography is not currently being executed, and the orientation of the optical member (302) fulfills the preset conditions.

4. The imaging system according to claim 1, further comprising
wherein
the determining unit (116) is further configured to identify whether the imaging system (100) is currently executing photography that uses the image sensor (120),
the second control unit (30, 114) is configured to control the orientation of the imaging device to a preset orientation when the height of the imaging system fulfills the preset conditions and the photography is not currently being executed, and
the first control unit (114) is configured to vibrate the optical member (302) when the height of the imaging system fulfills the preset conditions, the photography is not currently being executed, and the orientation of the optical member (302) fulfills the preset conditions.

5. The imaging system according to claim 1, wherein the first control unit (114) is configured to vibrate the optical member (302) by gradually changing the vibration frequency of the optical member (302) from a first frequency to a second frequency, then gradually changing the vibration frequency from the second frequency to the first frequency.

6. The imaging system according to claim 1, further comprising
an electromechanical conversion element (303) attached to the optical member (302), wherein
the first control unit (114) is configured to supply a control signal for controlling a vibration of the optical member (302) to the electromechanical conversion element (303).

7. The imaging system according to claim 6, wherein the first control unit (114) is configured to supply the control signal to the electromechanical conversion element (303) with a voltage amplitude of a first size when a voltage frequency is a first frequency, and with a voltage amplitude of a second size that is smaller than the first size when the voltage frequency is a second frequency that is closer to a resonant frequency of the optical member (302) than to the first frequency.

8. The imaging system according to claim 7 wherein the first control unit (114) is configured to supply the control signal, which has a larger voltage amplitude the farther the voltage frequency is from the second frequency, to the electromechanical conversion element (303).

9. The imaging system according to claim 6, wherein the first control unit (114) is configured to identify a first resonant frequency and a second resonant frequency of the electromechanical conversion element (303) and configured to supply the control signal to the electromechanical conversion element (303) based on the identified first resonant frequency and second resonant frequency.

10. A gimbal (50) supporting an imaging system (100) according to any one of claims 1 to 9,
wherein the gimbal is configured to receive a control signal from the vibration control unit (114) and the second control unit (30) and to control the orientation of the imaging system (100) to face downward when a determined height of the imaging system reaches at least the preset height.

11. The gimbal according to claim 10, wherein the gimbal (50) rotates at least one of a yaw axis, a pitch axis, and a roll axis.

12. A moving object (10) comprising the imaging system according to any one of claims 1 to 9.

13. The moving object according to claim 12, wherein the moving object (10) is an unmanned aerial vehicle (10).

## Patentansprüche

1. Bildgebungssystem, das an einem unbemannten Luftfahrzeug (UAV)(10) montiert ist und Folgendes umfasst:
einen Bildsensor (120);
eine Bildgebungsvorrichtung (100), die eine optische Komponente (302), die vor dem Bildsensor (120) angeordnet ist, und eine Bestimmungseinheit (116) zum Bestimmen einer Ausrichtung der optischen Komponente (302) beinhaltet;
eine erste Steuereinheit (114) zum Vibrieren der optischen Komponente (302), wenn die Ausrichtung der optischen Komponente (302) voreingestellte Bedingungen erfüllt; und
eine zweite Steuereinheit (30) zum Steuern einer Ausrichtung der Bildgebungsvorrichtung (100);
wobei das Bildgebungssystem **dadurch gekennzeichnet ist,**
**dass** die Bestimmungseinheit (116) dazu ausgelegt ist, eine Elevation des UAV (10) als die Höhe des Bildgebungssystems zu identifizieren, und
**dass** die zweite Steuereinheit (30) dazu ausgelegt ist, die Ausrichtung der Bildgebungsvorrichtung (100) derart zu steuern, dass sie nach unten weist, wenn die Höhe des Bildgebungssystems mindestens eine voreingestellte Höhe erreicht, und
**dass** die erste Steuereinheit (114) dazu ausgelegt ist, die optische Komponente (302) zu vibrieren, wenn die Höhe des Bildgebungssystems mindestens die voreingestellte Höhe erreicht, nachdem das UAV abgehoben hat und wenn sich die optische Komponente (302) in einer vertikalen Richtung unter dem Bildsensor (120) befindet.

2. Bildgebungssystem nach Anspruch 1, wobei die erste Steuereinheit (114) dazu ausgelegt ist, die optische Komponente (302) zu vibrieren, wenn der Normalvektor, der in eine gegenüberliegende Richtung einer Richtung weist, die von einer Ebene der optischen Komponente (302) auf einer gegenüberliegenden Seite des Bildsensors (120) zum Bildsensor (120) verläuft, einen vertikalen Richtungsbestandteil aufweist.

3. Bildgebungssystem nach Anspruch 1, wobei
die Bestimmungseinheit (116) ferner dazu ausgelegt ist zu identifizieren, ob das Bildgebungssystem derzeit eine Fotografie ausführt, die den Bildsensor (120) verwendet, und
die erste Steuereinheit (114) dazu ausgelegt ist, die optische Komponente (302) zu vibrieren, wenn derzeit keine Fotografie ausgeführt wird und die Ausrichtung der optischen Komponente (302) die voreingestellten Bedingungen erfüllt.

4. Bildgebungssystem nach Anspruch 1, das ferner Folgendes umfasst
wobei
die Bestimmungseinheit (116) ferner dazu ausgelegt ist zu identifizieren, ob das Bildgebungssystem (100) derzeit eine Fotografie ausführt, die den Bildsensor (120) verwendet,
die zweite Steuereinheit (30, 114) dazu ausgelegt ist, die Ausrichtung der Bildgebungsvorrichtung auf eine voreingestellte Ausrichtung zu steuern, wenn die Höhe des Bildgebungssystems die voreingestellten Bedingungen erfüllt und die Fotografie derzeit nicht ausgeführt wird, und
die erste Steuereinheit (114) dazu ausgelegt ist, die optische Komponente (302) zu vibrieren, wenn die Höhe des Bildgebungssystems die voreingestellten Bedingungen erfüllt, die Fotografie derzeit nicht ausgeführt wird und die Ausrichtung der optischen Komponente (302) die voreingestellten Bedingungen erfüllt.

5. Bildgebungssystem nach Anspruch 1, wobei die erste Steuereinheit (114) dazu ausgelegt ist, durch allmähliches Ändern der Vibrationsfrequenz der optischen Komponente (302) von einer ersten Frequenz in eine zweite Frequenz, dann allmähliches Ändern der Vibrationsfrequenz von der zweiten Frequenz in die erste Frequenz die optische Komponente (302) zu vibrieren.

6. Bildgebungssystem nach Anspruch 1, das ferner Folgendes umfasst
ein elektromechanisches Umwandlungselement (303), das an der optischen Komponente (302) befestigt ist, wobei
die erste Steuereinheit (114) dazu ausgelegt ist, dem elektromechanischen Umwandlungselement (303) ein Steuersignal zum Steuern einer Vibration der optischen Komponente (302) zuzuführen.

7. Bildgebungssystem nach Anspruch 6, wobei die erste Steuereinheit (114) dazu ausgelegt ist, dem elektromechanischen Umwandlungselement (303) das Steuersignal mit einer Spannungsamplitude einer ersten Größe zuzuführen, wenn eine Spannungsfrequenz eine erste Frequenz ist, und mit einer Spannungsamplitude einer zweiten Größe, die kleiner ist als die erste Größe, wenn die Spannungsfrequenz eine zweite Frequenz ist, die näher bei einer Resonanzfrequenz der optischen Komponente (302) liegt als die erste Frequenz.

8. Bildgebungssystem nach Anspruch 7, wobei die erste Steuereinheit (114) dazu ausgelegt ist, dem elektromechanischen Umwandlungselement (303) das Steuersignal zuzuführen, das eine größere Spannungsamplitude aufweist, je weiter die Spannungsfrequenz von der zweiten Frequenz entfernt ist.

9. Bildgebungssystem nach Anspruch 6, wobei die erste Steuereinheit (114) dazu ausgelegt ist, eine erste Resonanzfrequenz und eine zweite Resonanzfrequenz des elektromechanischen Umwandlungselements (303) zu identifizieren, und dazu ausgelegt, dem elektromechanischen Umwandlungselement (303) das Steuersignal auf Basis der identifizierten ersten Resonanzfrequenz und zweiten Resonanzfrequenz zuzuführen.

10. Kardanaufhängung (50), die ein Bildgebungssystem (100) nach einem der Ansprüche 1 bis 9 trägt,
wobei die Kardanaufhängung dazu ausgelegt ist, ein Steuersignal von der Vibrationssteuereinheit (114) und der zweiten Steuereinheit (30) zu empfangen und die Ausrichtung des Bildgebungssystems (100) derart zu steuern, dass es nach unten weist, wenn eine bestimmte Höhe des Bildgebungssystems mindestens die voreingestellte Höhe erreicht.

11. Kardanaufhängung nach Anspruch 10, wobei die Kardanaufhängung (50) mindestens eine von einer Gierachse, einer Nickachse und einer Rollachse dreht.

12. Sich bewegendes Objekt (10), das das Bildgebungssystem nach einem der Ansprüche 1 bis 9 umfasst.

13. Sich bewegendes Objekt nach Anspruch 12, wobei das sich bewegende Objekt (10) ein unbemanntes Luftfahrzeug (10) ist.

## Revendications

1. Système d'imagerie monté sur un véhicule aérien sans pilote (UAV) (10), comprenant :
un capteur d'image (120) ;
un dispositif d'imagerie (100) incluant un élément optique (302) disposé devant le capteur d'image (120) et une unité de détermination (116) pour déterminer une orientation de l'élément optique (302) ;
une première unité de commande (114) pour faire vibrer l'élément optique (302) lorsque l'orientation de l'élément optique (302) remplit les conditions prédéfinies ; et
une seconde unité de commande (30) pour commander une orientation du dispositif d'imagerie (100) ;
le système d'imagerie étant **caractérisé**
**en ce que** l'unité de détermination (116) est conçue pour identifier une élévation de l'UAV (10) en tant qu'hauteur du système d'imagerie, et
**en ce que** la seconde unité de commande (30) est conçue pour commander l'orientation du dispositif d'imagerie (100) de sorte à ce qu'il soit dirigé vers le bas lorsque la hauteur du système d'imagerie atteint au moins une hauteur prédéfinie, et
**en ce que** la première unité de commande (114) est conçue pour faire vibrer l'élément optique (302) lorsque la hauteur du système d'imagerie atteint au moins la hauteur prédéfinie après que l'UAV décolle et lorsque l'élément optique (302) est au-dessous du capteur d'image (120) dans une direction verticale.

2. Système d'imagerie selon la revendication 1, dans lequel la première unité de commande (114) est conçue pour faire vibrer l'élément optique (302) lorsque le vecteur normal dirigé dans une direction opposée à une direction allant vers le capteur d'image (120) par rapport à un plan de l'élément optique (302) sur un côté opposé du capteur d'image (120) a une composante de direction verticale.

3. Système d'imagerie selon la revendication 1, dans lequel
l'unité de détermination (116) est conçue en outre pour identifier si le système d'imagerie exécute actuellement une photographie qui utilise le capteur d'image (120), et
la première unité de commande (114) est conçue pour faire vibrer l'élément optique (302) lorsque la photographie n'est pas actuellement exécutée, et lorsque l'orientation de l'élément optique (302) remplit les conditions prédéfinies.

4. Système d'imagerie selon la revendication 1, dans lequel
l'unité de détermination (116) est conçue en outre pour identifier si le système d'imagerie (100) exécute actuellement une photographie qui utilise le capteur d'image (120),
la seconde unité de commande (30, 114) est conçue pour commander l'orientation du dispositif d'imagerie vers une orientation prédéfinie lorsque la hauteur du système d'imagerie remplit les conditions prédéfinies et lorsque la photographie n'est pas actuellement exécutée, et
la première unité de commande (114) est conçue pour faire vibrer l'élément optique (302) lorsque la hauteur du système d'imagerie remplit les conditions prédéfinies, lorsque la photographie n'est pas actuellement exécutée et lorsque l'orientation de l'élément optique (302) remplit les conditions prédéfinies.

5. Système d'imagerie selon la revendication 1, dans lequel la première unité de commande (114) est conçue pour faire vibrer l'élément optique (302) en changeant progressivement la fréquence vibratoire de l'élément optique (302) d'une première fréquence à une seconde fréquence, puis en changeant progressivement la fréquence vibratoire de la seconde fréquence à la première fréquence.

6. Système d'imagerie selon la revendication 1, comprenant en outre
un élément de conversion électromécanique (303) fixé à l'élément optique (302), dans lequel
la première unité de commande (114) est conçue pour fournir un signal de commande pour commander une vibration de l'élément optique (302) à l'élément de conversion électromécanique (303).

7. Système d'imagerie selon la revendication 6, dans lequel la première unité de commande (114) est conçue pour fournir le signal de commande à l'élément de conversion électromécanique (303) avec une amplitude de tension d'une première taille lorsqu'une fréquence de tension est une première fréquence, et avec une amplitude de tension d'une seconde taille qui est inférieure à la première taille lorsque la fréquence de tension est une seconde fréquence qui est plus proche d'une fréquence de résonance de l'élément optique (302) que de la première fréquence.

8. Système d'imagerie selon la revendication 7, dans lequel la première unité de commande (114) est conçue pour fournir le signal de commande, lequel a une amplitude de tension plus importante plus la fréquence de tension est éloignée de la seconde fréquence, à l'élément de conversion électromécanique (303).

9. Système d'imagerie selon la revendication 6, dans lequel la première unité de commande (114) est conçue pour identifier une première fréquence de résonance et une seconde fréquence de résonance de l'élément de conversion électromécanique (303) et conçue pour fournir le signal de commande à l'élément de conversion électromécanique (303) sur la base de la première fréquence de résonance et de la seconde fréquence de résonance identifiées.

10. Cardan (50) supportant un système d'imagerie (100) selon l'une quelconque des revendications 1 à 9,
dans lequel le cardan est conçu pour recevoir un signal de commande de l'unité de commande de vibration (114) et de la seconde unité de commande (30) et pour commander l'orientation du système d'imagerie (100) de sorte à ce qu'il soit dirigé vers le bas lorsqu'une hauteur déterminée du système d'imagerie atteint au moins la hauteur prédéfinie.

11. Cardan selon la revendication 10, dans lequel le cardan (50) tourne d'au moins l'un d'un axe de lacet, d'un axe de tangage et d'un axe de roulis.

12. Objet mobile (10) comprenant le système d'imagerie selon l'une quelconque des revendications 1 à 9.

13. Objet mobile selon la revendication 12, dans lequel l'objet mobile (10) est un véhicule aérien sans pilote (10).
